# EUROPEAN PATENT APPLICATION

(11) **EP 3 442 236 A1**
(43) Date of publication of application: **13.02.2019**
(21) Application number: 17186057.0
(22) Date of filing: 11.08.2017
(51) Int. Cl.: H04N 21/2665, H04N 21/858

(54) **METHOD TO ESTABLISH A LIST OF MEDIA CONTENTS ACCESSIBLE IN A SUB-MODULE EXECUTED ON A PROCESSING PLATFORM**

(71) Applicant: Nagravision S.A., 1033 Cheseaux-sur-Lausanne (CH)
(72) Inventor: HESS, Aurélien, 1024 Ecublens (CH); SARDA, Pierre, 1040 Echallens (CH)
(74) Representative: Hoyng Rokh Monegier LLP

(57) **Abstract**

The present case refers to a main application, loaded into a processing platform such as a mobile phone or a tablet, and for which sub-modules can be added allowing accessing media contents stored on a content server.

It is proposed a method to establish a list of media contents accessible by an application sub-module having an interface to receive commands from a simulator application, said method comprising:
- loading at least one application sub-module into a processing platform,
- loading the simulator application into the processing platform, said simulator application passing commands to the application sub-module via the application sub-module interface,
- sending commands by the simulator application to the application sub-module to request the application sub-module to select a media content from a media content server,
- fetching by the application sub-module addresses of the media contents on the media content server,
- transferring the addresses of the media contents to the simulator application, and
- establishing a list of said addresses in reference to said application sub-module.

## Description

### Introduction

The present case refers to a main application, loaded into a processing platform such as a mobile phone or a tablet, and for which sub-modules can be added allowing accessing media contents stored on a content server.

### Background

The consumption of video contents is no longer reserved for the home television, various other platforms such as PC, mobile phone or tablets are used to watch video contents. For that purpose, a dedicated application, called the main application, is loaded into the device and after launching the application, the user can select media content for viewing.

The first type of main applications is illustrated by Youtube^{™}, DailyMotion^{™} or FaceBook^{™}. These specific applications can be loaded into Android or IOS platforms and allows to access a media content hosted by these application providers.

A second type of main application is illustrated by Zattoo^{™}. This application allows live streaming of free-to-air television channels. The selected television channel is encrypted at the transmission side in order to control the use of the media content such as the recording. Only a genuine application, loaded on the target device can decrypt the transmitted content.

A third type of main application is illustrated by Kodi^{™}. This application itself does not allow to stream contents but is a powerful media player. Although local content can be played with this application, it is provided with the possibility to add plug-ins that contain the addresses and the user interface to access streaming contents. Due to the open nature of this application, any content provider can design a plug-in to access specific channels. As a consequence, today more than hundred plug-ins are available for various types of contents. For example if you are interested by cooking, you can find several cooking related plug-ins.

This raises the issue of the copyrights. Channels or contents may be copyrighted and access by a plug-in is subject to agreement with the copyright owner.

### Summary

An aim of the present application is to establish a list of media contents and metadata, identified by a content server's address, accessed by a sub-module loaded into a main application. It is proposed a method to establish a list of media contents accessible by an application sub-module having an interface to receive commands from a main application, said method comprising :
- loading at least one application sub-module into a processing platform,
- loading a simulator application into the processing platform, said simulator application passing commands to the application sub-module via application interfaces (eg. like sub-module or network),
- sending commands by the simulator application to the application sub-module to request the application sub-module to select a media content from a media content server,
- fetching by the application sub-module addresses of the media contents on the media content server,
- collecting the addresses of the media contents accessed by the application sub-module, and
- establishing a list of said addresses in reference to the application sub-module.

The simulator application is designed to be connected with the application sub-module and to provide the necessary interactions requested by the application sub-module. The addresses of the content server are preferably in the form of a URL.

### Brief description of the figures

The present application will be better understood thanks to the attached figures given as non limiting examples, namely:
- figure 1 illustrates a main application connected with several sub-modules,
- figure 2 illustrates a simulator application connected with several sub-modules and including the interface with the sub-modules,
- figure 3 illustrates a tree generated by the sub-module to access one resource, for example a video content.

### Detailed description

In order to access various media contents, a main application embeds the reception of a media content from a content server and the rendering of the same on a display connected to the device on which the main application is running. The particularity of this main application is to accept plug-ins, or application sub-modules, designed to propose an interface to the user in order to allow him/her to access specific resources referenced in said plug-ins.

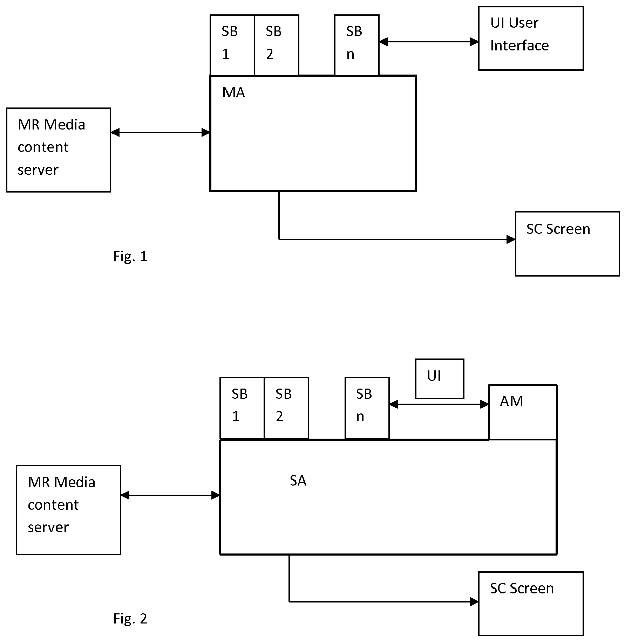

Figure 1 illustrates the structure of different modules interacting with each other. A main application MA is loaded with several application sub-modules SB1, SB2 ... SBn, each embedding an interface to access media contents.

Add-ons or sub-modules are packages that add features and functions not normally included with Kodi application. Add-ons are for example developed by a formal group of people also called "Team Kodi" who develop, maintain, support Kodi application, Kodi websites, etc. and also developed by third-parties. Kodi has a growing list of community driven add-ons for online content like YouTube, Hulu, Pandora Radio, as well as skins or themes and more contents available from a common official content server, while still enabling third-party developers to also host their own unofficial repositories for add-ons that any user can choose to add themselves if they like. Different types of add-ons are available within the Kodi environment such as audio, video, picture, weather, module or service.

For example, an application sub-module SB1 is dedicated to the resources of the British Broadcasting Corporation BBC. This add-on enables playing of Live and Catchup TV for UK only and Radio content for any country from the BBC iPlayer website. The add-on only provides an interface to access the BBC iPlayer website from Kodi.

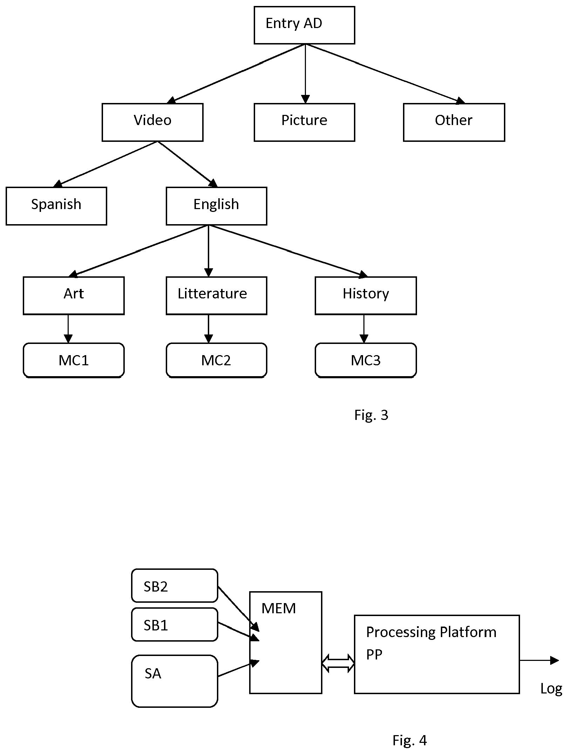

As such, this application sub-module contains the initial address of a media content server MR, which in the example above is the BBC content server. Once activated, the application sub-module provides an interface also called in the following specification User Interface UI for a user to navigate in a tree as illustrated in figure 3. From an entry point of the tree Entry, the user can select one of the topics of interest and select one branch of the tree, e.g. Video. At an end of a branch, e.g. MC1, a media content can be accessed and streamed via the main application. The end of the branch corresponds to the address of the media content. Once the user has confirmed his selection, the application sub-module fetches the address from the media content server and transfers it to the main application MA which handles the streaming from the address received from the application sub-module. The address is preferably in the form of a URL.

In the above example, the plug-in BBC iPlayer is not developed by BBC but by a private party. The access to the BBC content server is free for an individual but can be subject to a license for commercial purpose. A request from the content server owner allows thus to know which plug-in is designed to access its resources.

As illustrated in figure 2, the main application MA is replaced by a simulator application SA. The role of the simulator application SA is to replace the user's interaction and to provide the necessary commands to the application sub-module S1. Once the application sub-module S1 is started, a tree structure is presented to the UI User Interface. This user interface is intercepted by the simulator application SA. The simulator application comprises an analysis module AM to receive the tree structure from the application sub-module and to respond with a request to move into the tree. The analysis module AM discriminates between an entry of a sub-menu and the end of the branch. The end of the branch contains a description of the media content as well as a link to fetch an address on the target content server. Once the analysis module AM has reached this point, the simulator application SA requests the sub-module to fetch the address. The application sub-module then fetches the address to be stored in a list of available media contents related to this application sub-module. In case a description is available, the description is also stored with the address. In some cases, the description may be an image file showing which media content can be accessed at that location. The image file can then be stored with the address of the media content. The analysis module then sends a return command to the application sub-module to go one step up in the tree. All branches of the tree are analyzed and each time an end of a branch is detected, the description and address of the media content are stored in the media content list.

The process ends when all branches have been analyzed and the structure of the content presented by the add-on is reconstituted with the addresses of the media contents stored into the media content list.

A result could be as follows :

| | URL for BBC iPlayer | Description |
|---|---|---|
| 1 | http://bbcmedia.ic.llnwd.net/stream/bbcmedia_one_mf_p | BBC One |
| 2 | http://bbcmedia.ic.llnwd.net/stream/bbcmedia_two_mf_p | BBC Two |
| 3 | http://bbcmedia.ic.llnwd.net/stream/bbcmedia_three_mf_p | BBC Three |
| 4 | http://bbcmedia.ic.llnwd.net/stream/bbcmedia_four_mf_p | BBC Four |
| 5 | http://bbcmedia.ic.llnwd.net/stream/bbcmedia_news_mf_p | BBC News |
| 6 | http://bbcmedia.ic.llnwd.net/stream/bbcmedia_parl_mf_p | BBC Parliament |
| 7 | http://bbcmedia.ic.llnwd.net/stream/bbcmedia_alba_mf_p | BBC Alba |
| 8 | http://bbcmedia.ic.llnwd.net/stream/bbcmedia_cbbc_mf_p | BBC CBBC |

Each time a sub-module is executed, the simulator application creates a nodal representation table of this execution, in particular the tree structure. As the simulator application explores the sub-module, a call graph of the branches is recorded. During the exploration, the simulator application also maintains a list of already-explored nodes, indexed only via their plugin://URL parameters.

Each time the sub-module calls a simulator application function that results in hyperlinked UI element creation, a new nodal representation is added to the current node's children set.

Additionally, each time the sub-module calls a simulator application function that results in media being played, a special node type is recorded and the URL is added into the address list.

At the start of the sub-module, the latter accesses the content server and returns to the simulator application possible selections. A selection is in the form of a label, e.g. text or image or both, and in a form of a return call address. In the example as illustrated in figure 3, the sub-module returns to the simulator application three items: one for the video, one for the picture and one for "other". In the "other" category, the user can find audio content, text content such as pdf documents or news. Each item comprises a label, in our case a simple text, and a return call address.

These three items are stored in the nodal representation at the first level. Then the simulator application sends a command to the sub-module to execute the return call address related to the video.

The nodal representation table therefore comprises :

**Table 1 where LV set for Level. The column "LV" defines the tree structure.**

| LV | State | Parent node | Label | Return call |
|---|---|---|---|---|
| 0a | 0 | Root | Video | python2 easy_plug.py plugin://plugin.video.easyplug/mode=video |
| 0b | 0 | Root | Picture | python2 easy_plug.py plugin://plugin.video.easyplug/mode=picture |
| 0c | 0 | Root | Other | python2 easy_plug.py plugin://plugin.video.easyplug/mode=other |

The simulator application selects the first entry and sends to the sub-module the return call corresponding to the Video. The column "state" is updated accordingly with the status "explored".

Subsequent sub-module execution nodes are chosen according to data returned by executing the current node, encompassing accessing content servers to obtain the next hierarchic level and applying a graph-traversal algorithm, e.g. depth-first, breadth-first. As shown in figure 3, two items are fetched from the content server and sent to the simulator application. The nodal representation is therefore as in the Table 2 below:

**Table 2**

| LV | State | Parent node | Label | Return call |
|---|---|---|---|---|
| 0a | 1 | Root | Video | python2 easy_plug.py plugin://plugin.video.easyplug/mode=video |
| 0b | 0 | Root | Picture | python2 easy_plug.py plugin://plugin.video.easyplug/mode=picture |
| 0c | 0 | Root | Other | python2 easy_plug.py plugin://plugin.video.easyplug/mode=other |
| Oa.1a | 0 | Video | English | python2 easy_plug.py plugin://plugin.video.easyplug/mode=English |
| oa.1b | 0 | Video | Spanish | python2 easy_plug.py plugin://plugin.video.easyplug/mode=Spanish |

The State related to the first line (0a) is now set to 1, i.e. this branch has been tested. Following the example in figure 3, the simulator application sends a command to the application sub-module with the parameter of the return call as the "English" selection. The sub-module than accesses the content server to receive the information related to the next branch. After the simulator application has received the updated information from the sub-module, the nodal representation would be:

**Table 3**

| Level | State | Parent node | Label | Return call |
|---|---|---|---|---|
| 0a | 1 | Root | Video | python2 easy_plug.py plugin://plugin.video.easyplug/mode=video |
| 0b | 0 | Root | Picture | python2 easy_plug.py plugin://plugin.video.easyplug/mode=picture |
| 0c | 0 | Root | Other | python2 easy_plug.py plugin://plugin.video.easyplug/mode=other |
| 0a.1a | 1 | Video | English | python2 easy_plug.py plugin://plugin.video.easyplug/mode=English |
| oa.1b | 0 | Video | Spanish | python2 easy_plug.py plugin://plugin.video.easyplug/mode=Spanish |
| Oa.1a.2a | 0 | English | Art | python2 easy_plug.py plugin://plugin.video.easyplug/mode=en_art |
| 0a.1a.2b | 0 | English | Literature | python2 easy_plug.py plugin://plugin.video.easyplug/mode=en_litterature |
| 0a.1a.2c | 0 | English | History | python2 easy_plug.py plugin://plugin.video.easyplug/mode=en_history |

The selection of "Art" by the simulator application trigs the sub-application to go to the next level. In this case, only one selection is available and the item of this selection is returned to the simulator application by the sub-module. When the simulator application requests the media MC1 via the appropriate return call, the sub-module fetches the link from the content server and transfers this link to the simulator application. This link is the address of the media content selected by the simulator application at the end of a branch.

This address is then stored in the media content list. The media content list can be part of the nodal representation table, the address is added to the table at the level of the node. At that stage, the simulator application has the possibility to move one step up and use the nodal representation table to check the next branch.

This process is continued until all branches are checked and the media content addresses retrieved.

In order to simulate the human interactions, the simulator application, in a particular embodiment, introduces a delay or a waiting time between the reception of the items at a specific level and the command sent to the sub-module so select one of these items.

According to one embodiment, the simulator application can detect the presence of more than one application sub-modules. In this case, once a first application sub-module has been analyzed, another application sub-module is selected and the same process is executed.

The first step is to obtain, for a given application sub-module, the list of the addresses referenced by said application. The second step is to obtain a list of several application sub-modules, for example after the download of all application sub-modules available for the main application.

In a particular embodiment, while receiving an address of a media content from the application sub-module, the simulator application SA can request the streaming of all or part of the media content. This streaming content is then stored in relation with the media content address previously received. The "all or part" can be an extract of the first x seconds of the media content, x for example being predetermined in a range of 10 seconds to several minutes, or can be an extraction of snapshot images, for example one or several I frames. Beside the media content list, other environment parameters are stored in relation with the media content list such as the current time at which the analysis was carried out or the IP address used to access the media server.

In one embodiment, the simulator application can use a proxy to simulate the location of the processing platform in other geographic area. In respect with the example above, the BBC iPlayer can be tested according to the steps described above from an IP address originating from UK. A first list of addresses of media contents is established. The same operation can be reproduced via a proxy address simulating, for the BBC content server, the presence of the target device in France. The IP address contains geographic indication and the BBC server can apply different rules, for example limiting the access to media contents for addresses originating outside of UK. A second list of addresses of media contents is built with the IP address of the processing platform located in France. The operator can verify the efficiency of the rules enforcement at the BBC media server.

In a particular embodiment, the nodal representation table, built during the first session with the IP address in the allowed area can be used during subsequent sessions with the IP address outside the allowed area. In the example above, for the BBC media server, it is limited to UK. The simulator application can use the Return call stored previously without going through all nodes and branches. If the implementation of the access control per geographical area is correctly made, the access to the media content should be denied in the same manner as it will be for a user starting from the root level.

The nodal representation table made during a first session can be used at a later stage without modifying the IP address as set above. During the first session, the branches and the nodes are discovered and the nodal representation table is populated. A first list of addresses of media content is produced. During a second session, only the end of the branches linked to a media content are called by the simulator application to the sub-module. The first session is the scan of the tree and the second session is a direct access to the end of a branch. The first session produces then a first list of addresses of media contents and the second session produces a second list of addresses of media content. A comparison can be carried out between these lists to detect a change of behavior of the sub-module depending on the way the sub-module is used.

According to an embodiment, at the start of an application sub-module, a request is sent by the sub-module to the main application MA to obtain the environment parameters of the main application. The main application MA responds by an identification of its OS such as Android, iOS, Linux, Mac OS or Windows.

According to one embodiment, the simulator application SA, when receiving the request from the application sub-module, can respond during a first session with said application sub-module, with a first operating system identifier, and during a second session with the same application sub-module, with a second operating system identifier. In this case, the sub-module is tested is more than one environment. For each of the operating system, a list of addresses of media contents in produced. An exhaustive list can be produced by concatenating the list produced for each operating system and removing the duplicate entries or elements or items.

According to a further embodiment, the simulator application comprises a reference media content list containing the addresses under scrutiny. Once the current media content list is established, it is then compared with the reference media content list to detect if some content server under scrutiny is referenced by an application sub-module. In the positive event, the simulator application transmits a notification in a log file for example.

The simulator application is executed on a processing platform having one or more processors. The simulator application is loaded into a memory MEM of said platform PP and the application sub-modules are loaded into the memory as well.

## Claims

1. Method to establish a list of media contents accessible by an application sub-module having an interface to receive commands from a simulator application, said method comprising :
- loading at least one application sub-module into a processing platform,
- loading the simulator application into the processing platform, said simulator application passing commands to the application sub-module via the application sub-module interface,
- sending commands by the simulator application to the application sub-module to request the application sub-module to select a media content from a media content server,
- fetching by the application sub-module addresses of the media contents on the media content server,
- transferring the addresses of the media contents to the simulator application, and
- establishing a list of said addresses in reference to said application sub-module.

2. The method of claim 1, wherein it further comprises:
- extracting by the sub-module from the media content server, a list of selectable items defining at least part of a tree structure allowing to navigate among the media contents, said items defining either a node of the tree or a link to a media content,
- transferring the list of items to the simulator application,
- sending by the simulator application commands to the sub-module to select one node or one link to the media content, and in case of a link to the media content, receiving from the sub-module, the media content address fetched from the media content server.

3. The method of claim 2, wherein the simulator application stores the list of items in a nodal representation table allowing to navigate along the tree and to request the media content of each branch of the tree.

4. The method of any of claims 1 to 4, wherein the simulator application applies a delay between each command sent to the sub-module to simulate a human interaction.

5. The method of any of the claims 1 to 5, wherein it comprises:
- requesting by the sub-module, an identifier of an operating system of the simulator application,
- responding, during a first session with the sub-module, a first type of operating system and collecting a first list of addresses of the media content,
- responding, during a second session, a second type of operating system and collecting a second list of addresses of media contents.

6. The method of any of the claims 1 to 5, wherein the simulator application comprises a reference list of addresses of media contents, and it comprises the step of comparing the acquired list of addresses of media contents with the reference list of addresses of media contents and logging the result of the comparison.

7. The method of any of the claims 1 to 6, wherein a first and a second sub-module are loaded into the processing platform, and comprising :
- establishing a first list of said addresses in reference to said first application sub-module, and
- establishing a second list of said addresses in reference to said second application sub-module.

8. The method of any of the claims 1 to 6, wherein it comprises:
- requesting by the simulator application the streaming of the media content identified by the media content address from the media content server,
- storing all or part of the streamed media content.
